# EUROPÄISCHE PATENTSCHRIFT

(11) **EP 0 917 990 B1**
(45) Veröffentlichungstag und Bekanntmachung des Hinweises auf die Patenterteilung: **26.11.2003**
(21) Anmeldenummer: 98118945.9
(22) Anmeldetag: 07.10.1998
(51) Int. Cl.: B60R 16/02

(54) **Entkoppelungselement für stoss- und temperaturempfindliche Bauteile**
Decoupling element for shock and temperature sensitive structural parts
Elément de découplage pour des partie sensibles aux chocs et à la température

(30) Priorität: 20.11.1997 DE 19751364
(43) Veröffentlichungstag der Anmeldung: 26.05.1999
(73) Patentinhaber: MAN NUTZFAHRZEUGE AG, 80995 München (DE)
(72) Erfinder: Pister, Manfred, Dipl.-Ing.(FH), 90403 Nürnberg (DE)

(56) Entgegenhaltungen:
- EP-A- 0 622 984
- DE-A- 2 707 754
- US-A- 4 763 611

## Beschreibung

Die Erfindung bezieht sich auf ein Entkoppelungselement gemäß dem Gattungsbegriff des Patentanspruches 1, wie es z.B. aus EP-A-0 622 984 bekannt ist.

Gewisse Bauteile, insbesondere elektronische Bauteile sind sowohl stoß- als auch temperaturempfindlich. Zum Beispiel weisen moderne Brennkraftmaschinen für Nutzfahrzeuge für Steuerung und Kontrollfunktionen eine Elektronik auf, welche an der Brennkraftmaschine selbst befestigt ist und somit einer oft unzulässig hohen Beanspruchung durch mechanische Schwingungen und gleichzeitig einer hohen Beanspruchung durch Temperatur unterworfen ist.

Aufgabe der Erfindung ist es ein Entkoppelungselement zu schaffen, welches ein Bauteil sowohl gegen mechanische Stöße, als auch gegen Temperatureinflüsse schützt und dabei der bauliche Aufwand in Grenzen bleibt.

Gelöst wird diese Aufgabe durch die kennzeichnenden Merkmale des Patentanspruches 1.

Durch die Bohrung im Dämpferelement kann dem Bauteil Kühlmedium - bei einer Brennkraftmaschine z. B. Brennstoff- zugeführt werden. Das erfindungsgemäße Entkoppelungselement übernimmt somit sowohl die Funktion der schwingungstechnischen Trennung, als auch den Schutz gegen Temperatureinflüsse. Durch die Multifunktion des Entkoppelungselements hält sich auch der bauliche Aufwand in engen Grenzen, was bei Anwendung an Massenartikeln wie z.B. bei Brennkraftmaschinen von Nutz-fahrzeugen von Bedeutung ist.

Vorteilhafte Weiterbildungen können den Unteransprüchen 2 bis 4 entnommen werden.

Ein Ausführungsbeispiel eines erfindungsgemäßen Entkoppelungselements ist an Hand von Zeichnungen dargestellt. Es zeigt:
- Fig. 1: einen Längsschnitt durch ein Entkoppelungselement
- Fig. 2: eine EDC-Einheit mit Entkoppelungselement zum Anschluß an einen Kühlkreislauf
- Fig. 3: eine Seitenansicht von Fig. 2 mit Befestigung der EDC-Einheit an einer Brennkraftmaschine

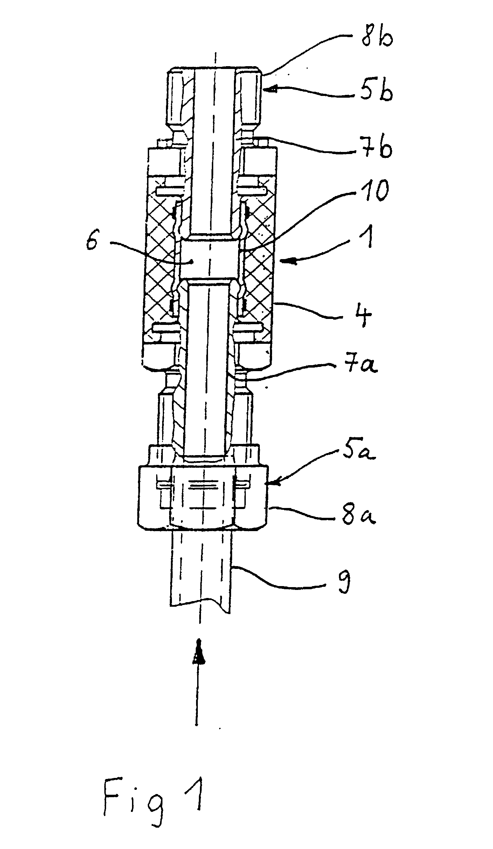

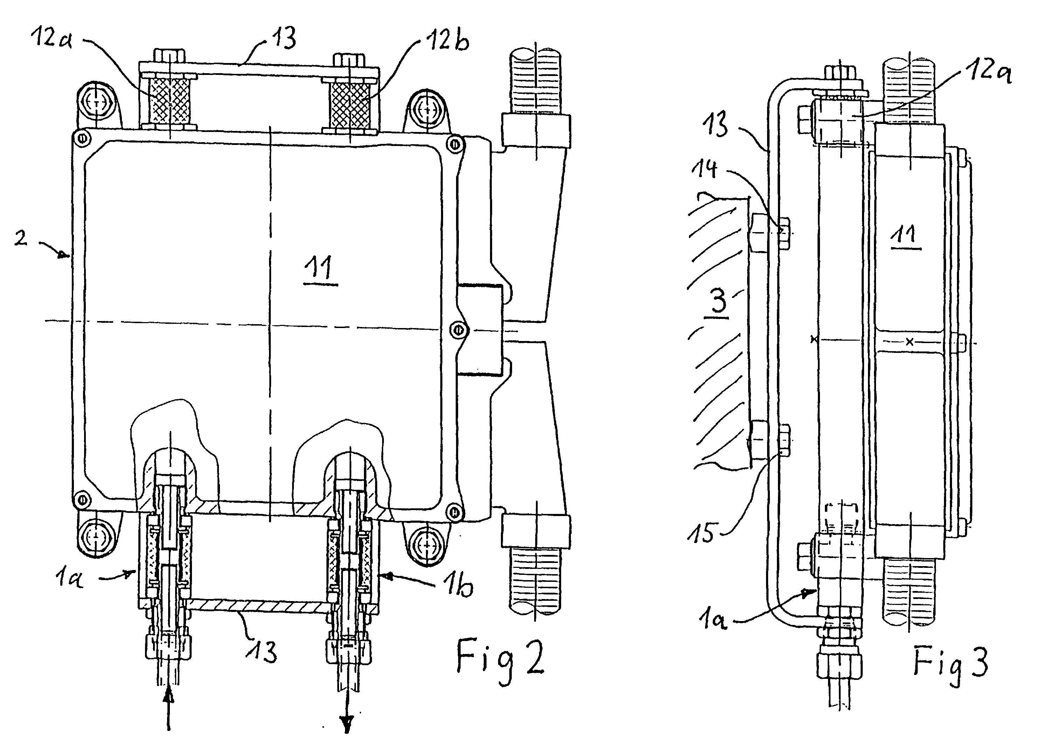

Fig. 1 zeigt ein Entkoppelungselement 1 welches dem Anschluß eines Bauteiles an einen Kühlkreislauf und an eine Basis - beispielsweise eine Brennkraftmaschinen - dient. Das Entkoppelungselement 1 wird einerseits an ein Bauteil 2 und andererseits an eine Basis 3 ( Fig. 2, 3 ) angeschlossen und besteht im wesentlichen aus einem Dämpferelement 4 und zwei Verbindungselementen 5a, 5b. Erfindungsgemäß weist das Dämpferelement 4 eine Bohrung 6 auf, durch welche ein Kühlmittel fließen kann. Die Verbindungselemente 5a, 5b bestehen aus Rohrstücken 7a, 7b und Verschraubungen 8a, 8b, um die Verbindung zwischen einer Kühlmittelleitung 9 und dem zu kühlenden Bauteil 2 herzustellen, wie an einem Ausführungsbeispiel in den Figuren 2, 3 erläutert wird. Im dargestellten Beispiel ist das erste Verbindungselement 5b an das Bauteil 2 und das zweite Verbindungselement 5a an die Kühlmittelleitung 9 angeschlossen. Die Fließrichtung des Kühlmittels ist durch einen Pfeil angedeutet.

Falls als Kühlmittel ein aggressives Medium verwendet wird ist es vorteilhaft, die beiden Rohrstücke 7a. 7b mit einem Dichtschlauch 10 zu verbinden, welcher mittels Schlauchschellen an den Rohrstücken befestigt wird. Das Dichtelement 4 kann mittels Spritztechnik eingebracht werden, damit es mit den Verbindungselementen 5a, 5b eine flüssigkeitsdichte Verbindung eingeht und den Dichtschlauch 10 allseitig umgibt.

Fig. 2 zeigt am Beispiel einer "Elektronik-Diesel-Control" Einheit 11, abgekürzt EDC genannt, die Befestigung am Kurbelgehäuse einer Brennkraftmaschine. Da die EDC stoß- und temperaturempfindlich ist, muß sie einerseits schwingungstechnisch vom Kurbelgehäuse entkoppelt und andererseits gekühlt werden.

Die schwingungstechnische Entkoppelung erfolgt mittels Dämpfungselementen 12a, 12b, über die die EDC 11 indirekt mittels einer Konsole 13 an das Kurbelgehäuse angeschlossen ist. Die Zu- und Abfuhr von Kühlmittel erfolgt über zwei baugleiche, der Fig. 1 entsprechende Entkoppelungselemente 1a, 1b welche an der Konsole 13 und am Bauteil 2 ( hier die EDC 11) befestigt sind. Die Pfeile deuten die Fließrichtung des Kühlmittels an. Als Kühlmittel bietet sich im vorliegenden Fall der Brennstoff an. Die der Fig. 1 entsprechenden Entkoppelungselemente erfüllen somit die Funktion der schwingungstechnischen Entkoppelung und der Zufuhr von Kühlmittel. Entkoppelungselemente wie sie in Fig. 1 beschrieben sind lassen sich natürlich auch an anderen Bauteilen anwenden, bei denen ähnliche Forderungen gestellt werden. Die Wahl des Kühlmittels ergibt sich aus den Randbedingungen.

In Fig. 3 ist die EDC 11 in Seitenansicht dargestellt. Sie wird mittels der Konsole 13 und Schrauben 14, 15 an der Basis 3 - hier ein nicht näher dargestelltes Kurbelgehäuse der Brennkraftmaschine befestigt. Der reinen mechanischen Befestigung, bei gleichzeitiger Entkoppelung, dient das hier sichtbare Dämpfungselement 12a. Der zusätzlichen Zufuhr von Kühlmittel ( hier Brennstoff ) dient das Entkoppelungselement 1a.

Im vorliegenden Anwendungsbeispiel einer EDC an Brennkraftmaschinen und der Anwendung von Brennstoff als Kühlmittel ist es vorteilhaft das Dämpferelement 4 ( Fig. 1 ) allseitig mit einem Mantel aus feuerfestem Material zu umgeben.

## Patentansprüche

1. Entkoppelungselement für stoß- und temperaturempfindliche Bauteile (2), bestehend aus einem Dämpferelement (4) welches an seinen Stirnseiten mit jeweils einem Verbindungselement (5a, 5b) verbunden ist, wobei ein erstes Verbindungselement (5b) an das Bauteil (2) und ein zweites Verbindungselement (5a) an eine Basis (3) angeschlossen ist, auf der das Bauteil zu befestigen ist, **dadurch gekennzeichnet, daß** das Dämpferelement (4) eine Bohrung (6) für die Kühlmittelführung aufweist, daß die Kühlmittelzu- bzw. abfuhr über das zweite Verbindungselement (5a) erfolgt, und daß beide Verbindungselemente (5a, 5b) aus Rohrstücken (7a, 7b) gebildet werden, welche in die Bohrung (6) ragen und der Führung von Kühlmittel dienen.

2. Entkoppelungselement nach Anspruch 1, **dadurch gekennzeichnet, daß** die Rohrstücke (7a, 7b) der Verbindungselemente (5a, 5b) durch einen Dichtschlauch (10) verbunden werden und der Dichtschlauch (10) vom Dämpferelement (4) umgeben ist.

3. Entkoppelungselement nach den Ansprüchen 1 und 2, **dadurch gekennzeichnet, daß** das Bauteil (2) eine Steuerelektronik (11) und die Basis (3) eine Brennkraftmaschine ist, wobei als Kühlmittel der Brennstoff verwendet wird.

4. Entkoppelungselement nach Anspruch 1, **dadurch gekennzeichnet, daß** das Dämpferelement (4) mit einem Mantel aus feuerfestem Material umgeben ist.

## Claims

1. A de-coupling element for impact- and temperature-sensitive components (2), comprising a damper element (4) which is connected at its end faces to a respective connexion element (5a, 5b) in each case, wherein a first connexion element (5b) is attached to the component (2) and a second connexion element (5a) is attached to a base (3) on which the component is to be fastened, **characterized in that** the damper element (4) has a bore (6) for the coolant supply, the coolant supply and removal take place by way of the second connexion element (5a), and the two connexion elements (5a, 5b) are formed by tube members (7a, 7b) which project into the bore (6) and are used for conveying coolant.

2. A de-coupling element according to Claim 1, **characterized in that** the tube members (7a, 7b) of the connexion elements (5a, 5b) are connected by a sealing hose (10) and the sealing hose (10) is surrounded by the damper element (4).

3. A de-coupling element according to Claims 1 and 2, **characterized in that** the component (2) is an electronic control means (11) and the base (3) is an internal-combustion engine, wherein the fuel is used as the coolant.

4. A de-coupling element according to Claim 1, **characterized in that** the damper element (4) is surrounded by a jacket of refractory material.

## Revendications

1. Élément de découplage pour composants (2) sensibles aux chocs et à la température, se constituant d'un élément (4) d'amortissement qui, en ses faces frontales, est chaque fois lié à un élément (5a, 5b) de liaison, où un premier élément (5b) de liaison est raccordé au composant (2) et un deuxième élément (5a) de liaison à une base (3) sur laquelle la partie est à fixer,
**caractérisé en ce que**
l'élément (4) d'amortissement présente un perçage (6) pour la conduite du réfrigérant, l'arrivée ou l'évacuation du réfrigérant se réalise par le deuxième élément (5a) de liaison et les deux éléments de liaison (5a, 5b) sont formés de pièces (7a, 7b) tubulaires qui dépassent dans le perçage (6) et servent à la conduite de réfrigérant.

2. Élément de découplage selon la revendication 1,
**caractérisé en ce que**
les pièces (7a, 7b) tubulaires des éléments (5a, 5b) de liaison sont reliées par un tuyau (10) souple étanche et le tuyau (10) souple étanche est entouré par l'élément (4) d'amortissement.

3. Élément de découplage selon les revendications 1 et 2,
**caractérisé en ce que**
le composant (2) est une électronique (11) de commande et la base (3) un moteur à combustion interne qui utilise, en tant que réfrigérant, le carburant.

4. Élément de découplage selon la revendication 1,
**caractérisé en ce que**
l'élément (4) d'amortissement est entouré d'une enveloppe de matériau résistant au feu.
